# FASCICULE DE BREVET EUROPEEN

(11) **EP 0 402 223 B1**
(45) Date de publication et mention de la délivrance du brevet: **05.05.1993**
(21) Numéro de dépôt: 90401500.5
(22) Date de dépôt: 05.06.1990
(51) Int. Cl.: F16B 13/04, F16B 13/10

(54) **Cheville d'ancrage dans un trou à contre-dépouille**
Verankerunsdübel in einem hinterschnittenen Loch
Anchoring plug in an undercut hole

(30) Priorité: 07.06.1989 FR 8907513
(43) Date de publication de la demande: 12.12.1990
(73) Titulaire: SOCIETE DE PROSPECTION ET D'INVENTIONS TECHNIQUES SPIT, F-26501 Bourg-Les-Valence Cédex (FR)
(72) Inventeur: Revol, Gérard, F-26120 Chateaudouble (FR); Barthomeuf, Jean-Paul, F-26300 Alixan Village (FR)
(74) Mandataire: Bloch, Gérard

(56) Documents cités:
- EP-A- 0 015 305
- EP-A- 0 067 941
- EP-A- 0 217 053
- US-A- 2 181 657

## Description

La présente invention concerne une cheville de fixation d'un élément à un matériau récepteur par ancrage de la cheville dans un trou à contre-dépouille foré dans le matériau,comprenant un corps avec une extrémité externe de fixation de l'élément et une extrémité interne conique évasée vers l'intérieur du trou, une bague de verrouillage formée de segments disposés autour du corps et destinés à basculer dans la contre-dépouille du trou et y être verrouillés par l'extrémité interne évasée du corps, le diamètre extérieur de la bague étant sensiblement égal à celui du trou, des moyens d'immobilisation axiale provisoire des segments de la bague sur le corps, des moyens solidaires du corps pour entraîner la bague en translation jusque dans la contre-dépouille du trou et des moyens élastiques à action radiale pour faire basculer les segments de la bague dans la contre-dépouille du trou.

Des chevilles de ce type sont utilisées pour la fixation de pièces en zone tendue d'un matériau de construction, par exemple la sous-face d'une dalle en béton, Plus particulièrement, ces chevilles sont prévues pour rester suffisamment ancrées même si une fissure se forme dans leur zone de réception.

Une telle cheville est enseignée par le document US-A-2 181 657. Une cheville d'un type analogue, mais non identique, est enseignée par le document EP-A-0 015 305. Ces chevilles de l'art antérieur présentent des inconvénients, essentiellement liés à la complexité de leur fabrication, La première a une bague de verrouillage dont les segments nécessitent de nombreux usinages, La seconde exige une entretoise et un ressort de verrouillage précontraint.

La présente invention vise donc à simplifier les chevilles de l'art antérieur.

A cet effet, la présente invention concerne une cheville du type mentionné ci-dessus, caractérisée par le fait que lesdits moyens élastiques sont agencés pour, par une action exercée radialement au corps et à la bague, assurer la double fonction de basculement des segments de la bague et, avant, d'immobilisation axiale provisoire de ceux-ci en combinaison avec des moyens agencés pour empêcher provisoirement la fonction de basculement.

Dans une première forme de réalisation de la cheville de l'invention, lesdits moyens d'empêchement de la fonction de basculement des moyens élastiques sont montés autour du corps de la cheville et agencés pour, sous l'action des moyens élastiques, coopérer radialement avec la bague dans sa fonction d'immobilisation et pour être détachés d'elle sous l'action combinée du bord du trou d'ancrage et des moyens d'entraînement de la bague en translation.

Dans ce cas, la bague de verrouillage comporte une portion interne, disposée autour d'une portion de diamètre rétréci du corps de la cheville et de même diamètre intérieur que la portion de corps rétrécie, prolongée par une portion externe, de diamètre intérieur plus grand que le diamètre du corps de cheville et formant jupe à la surface extérieure de laquelle est ménagée une gorge de réception d'un anneau élastique et une collerette,pourvue d'une jupe interne, est montée autour du corps de cheville pour prendre appui, d'abord contre la jupe de la bague, avec sa jupe intercalée entre le corps de cheville et la jupe de la bague, et ainsi permettre à l'anneau élastique d'assurer sa fonction d'immobilisation et, ensuite, contre le bord du trou d'ancrage pour permettre à la bague de se détacher de la collerette sous l'action de l'épaulement ménagé par la portion de diamètre rétréci du corps de cheville.

Dans une deuxième forme de réalisation de la cheville de l'invention, les moyens élastiques sont montés autour de la bague de verrouillage et mobiles relativement à celle-ci d'une position interne d'immobilisation à une position externe de basculement, la bague de verrouillage et les moyens élastiques étant agencés pour que le trou d'ancrage maintienne provisoirement les moyens élastiques dans leur position d'immobilisation.

Dans ce cas, les moyens d'entraînement de la bague en translation jusque dans la contre-dépouille comprennent une rondelle montée sur le corps de cheville, en appui contre l'extrémité externe de la bague.

Alors, la bague de verrouillage peut comporter une portion interne, disposée autour du corps de cheville et de même diamètre intérieur que le corps de cheville, prolongée par une portion externe, de diamètre intérieur plus grand que le diamètre du corps de cheville et formant jupe à la surface extérieure de laquelle est ménagée une gorge de réception d'un anneau élastique dans sa position de basculement, la portion interne de la bague comportant extérieurement des moyens annulaires de réception de l'anneau élastique dans sa position d'immobilisation.

Dans ce dernier cas, les moyens de réception de l'anneau élastique dans sa position d'immobilisation peuvent comporter un épaulement annulaire raccordé à la gorge de la jupe par la surface extérieure de celle-ci et l'épaisseur de l'anneau est supérieure à la différence des diamètres des surfaces extérieures de la portion interne de la bague et de sa jupe.

Dans le même dernier cas, la surface extérieure de la bague de verrouillage peut avoir un diamètre constant, et comporter une fine gorge de réception de l'anneau élastique dans sa position d'immobilisation.

L'invention sera mieux comprise à l'aide de la description suivante de plusieurs formes de réalisation de la cheville de l'invention, en référence aux dessins annexés sur lesquels
- la figure 1 est une vue partiellement en coupe longitudinale d'une première forme de réalisation de la cheville de l'invention;
- la figure 2 est une vue de la cheville de la figure 1 après son introduction dans un trou d'ancrage, sa collerette en appui contre le bord de ce trou;
- la figure 3 est une vue de la cheville de la figure 1, plus enfoncée dans le trou d'ancrage qu'elle ne l'est sur la figure 2;
- la figure 4 est une vue de la cheville de la figure 1, après son verrouillage dans le trou d'ancrage;
- la figure 5 est une vue en coupe d'une première variante de réalisation de la collerette de la cheville de la figure 1;
- la figure 6 est une vue en bout de la collerette de la figure 5;
- la figure 7 est une vue en coupe d'une deuxième variante de réalisation de la collerette de la cheville de la figure 1;
- la figure 8 est une vue en coupe d'une troisième variante de réalisation de la collerette de la cheville de la figure 1;
- la figure 9 est une vue partiellement en coupe longitudinale d'une deuxième forme de réalisation de la cheville de l'invention;
- la figure 10 est une vue de la cheville de la figure 9 après son introduction dans le trou d'ancrage, son anneau élastique pincé entre la paroi du trou et sa bague de verrouillage;
- la figure 11 est une vue de la cheville de la figure 9, plus enfoncée dans le trou d'ancrage qu'elle ne l'est sur la figure 10, avec son anneau élastique libéré et dans la gorge de basculement;
- la figure 12 est une vue de la cheville de la figure 9 après son verrouillage dans le trou d'ancrage;
- la figure 13 est une vue de la cheville de la figure 9, avec une variante de réalisation de la bague de verrouillage, après introduction dans le trou d'ancrage.

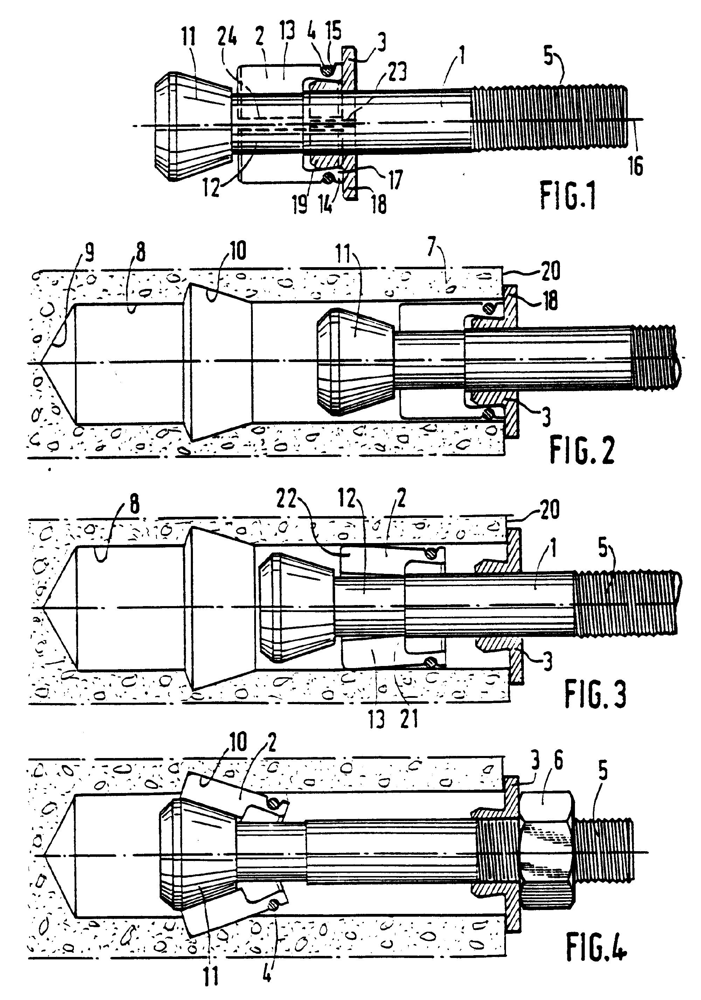

En référence aux figures 1-4, la cheville de l'invention comporte un corps 1, une bague de verrouillage 2, une collerette d'immobilisation 3 et un anneau élastique 4.

Le corps 1 est constitué d'une tige pourvue d'une extrémité, dite externe, ici filetée, destinée à recevoir un écrou de verrouillage 6 (figure 4) ainsi qu'un écrou, non représenté, de fixation d'un élément à fixer à un matériau support 7 dans lequel a été foré un trou d'ancrage 8. Le trou d'ancrage 8 a été foré avec, en deça de son fond 9, une contre-dépouille 10 évasée vers l'intérieur du trou.

Le corps 1 est aussi pourvu d'une extrémité, dite interne, conique 11, évasée dans la direction opposée à l'extrémité externe du corps, soit dans la même direction que la contre-dépouille 10. Entre les deux extrémités 10, 11 du corps de cheville, s'étend, adjacente à l'extrémité conique 11, une portion de tige 12 de diamètre légèrement rétréci.

La bague 2, formée de plusieurs éléments lui conférant un caractère annulaire, comporte une portion, dite interne, 13, de même diamètre intérieur que la portion rétrécie 12 du corps de cheville, et une portion, dite externe, 14, de diamètre intérieur plus grand que le diamètre du corps de cheville et formant jupe. Le diamètre extérieur de la bague 2 est sensiblement égal au diamètre du trou 8, enfait très légèrement inférieur.

A la surface extérieure de la jupe 4 est ménagée une gorge 15 de réception de l'anneau élastique 4 qui tend à rabattre légèrement vers l'axe 16 de la cheville les pattes des éléments constitutifs de la bague formant la jupe. En réalité, le diamètre intérieur de la jupe 14 n'est pas tout-à-fait constant et il diminue légèrement depuis son extrémité interne adjacente à la portion interne 13 de la bague jusqu'à son extrémité externe libre 17. La collerette 3 comporte une rondelle 18 prolongée par une jupe interne 19. Le diamètre intérieur de la collerette 3 est égal à celui du corps de cheville. Le diamètre extérieur de la rondelle 18 est plus grand que le diamètre du trou d'ancrage 8. La surface extérieure de la jupe 19 est complémentaire de la surface intérieure de la jupe 14 de la bague 2 et la longueur axiale de la jupe 19 de la collerette est légèrement plus petite que celle de la jupe de la bague.

Le fonctionnement de la cheville qui vient d'être décrite va maintenant être abordé.

Tout d'abord, pendant le stockage et la manutention de la cheville, la jupe 19 de la collerette 3 est intercalée entre le corps de cheville 1 et la jupe 14 de la bague de verrouillage, la rondelle 18 en appui contre l'extrémité libre 17 de la jupe 14. L'action radiale de l'anneau élastique 6 sur les pattes de la jupe 14 de la bague s'applique indirectement sur la jupe 19 de la collerette 3 pour maintenir provisoirement l'ensemble immobilisé radialement et axialement sur le corps de cheville. On notera que la coopération desmodronique entre les deux jupes 14, 19 combinée à l'action radiale de l'anneau élastique 15 évitent que la bague et la collerette ne se désolidarisent trop facilement et renforce donc la fonction d'immobilisation de l'anneau élastique 4.

On notera encore que la collerette 3, par sa jupe 19, empêche provisoirement l'anneau élastique 4 de faire basculer les segments de la bague 2.

L'opération d'ancrage de la cheville s'effectue en introduisant la cheville dans le trou 8 par son extrémité interne évasée 11 jusqu'à ce que la rondelle 18 de la collerette 3 vienne en appui contre le bord 20 du trou 8 (figure 2). Ensuite, en poussant l'extrémité externe filetée 5 du corps de cheville 1, celui-ci s'enfonce dans le trou 8 : la collerette 3 reste en appui contre le bord 20 du trou 8, la bague 2 suit le corps 1 sous l'action de l'épaulement annulaire radial 21 ménagé par la portion rétrécie 12 du corps 1 sur le reste du corps et poussant la bague 2 par une couronne intérieure de la portion interne 13 de la bague, après que la bague se soit détachée de la collerette 3 contre l'action de l'anneau 4, l'anneau élastique faisant basculer les éléments de la bague 2 jusqu'à ce que les extrémités internes 22 de ces éléments viennent buter contre la paroi du trou d'ancrage 8 (figure 3)

Quand les éléments de la bague 2 arrivent au niveau de la contre-dépouille 10, sous l'action de l'anneau 4, les éléments de bague 2 basculent dans la contre-dépouille 10. A l'aide de l'écrou 6 qu'on visse sur l'extrémité filetée 5, et grâce à l'appui de l'écrou 6 sur la collerette 3, le corps de cheville 1 remonte dans le trou 8 jusqu'à ce que l'extrémité conique 11, qui avait dépassé la contre-dépouille 10, y revienne, mais en sens inverse, pour coopérer avec les éléments de bague 2, expandre au mieux la bague 2, plaquer ainsi ses éléments contre la paroi de la contre-dépouille et verrouiller ainsi la cheville dans le trou 8 (figure 4).

Dans la forme de réalisation qui vient d'être décrite, la collerette 3 est en réalité constituée de deux demi-collerettes, comme illustré par la fente 23 sur la figure 1. Quant à la fente 24, c'est celle qui sépare ici les quatre segments de la bague 2 qui sont représentés sur cette même figure 1.

Des variantes de réalisation de la collerette peuvent être envisagées.

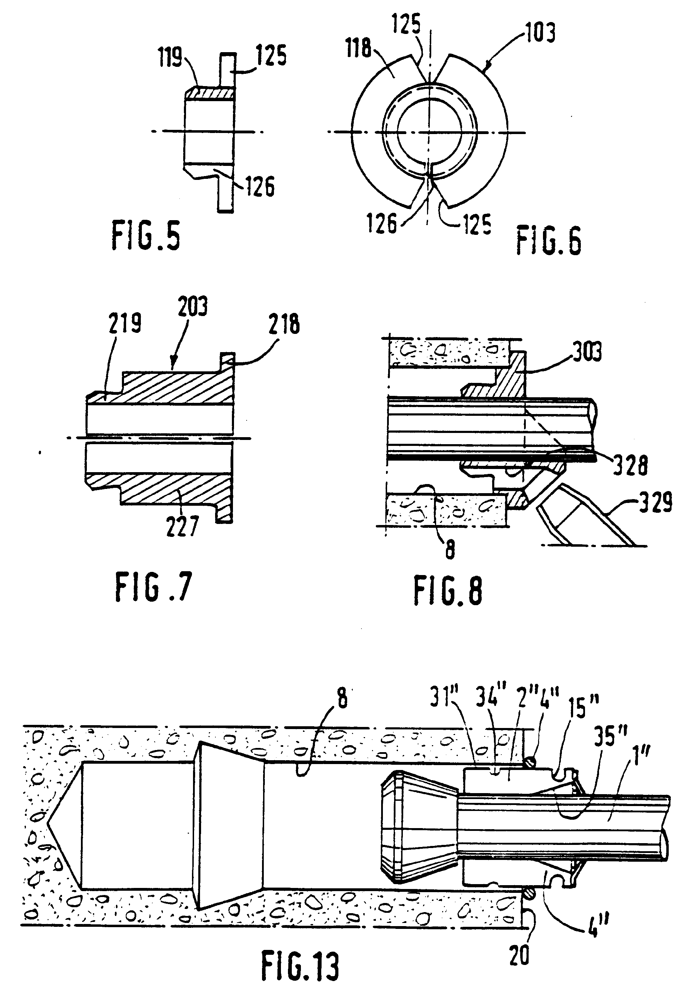

Elle peut être monobloc, avec une rondelle 118 échancrée radialement, aux deux extrémités d'un même diamètre, en 125, l'une des deux échancrures se prolongeant par une fente 126, s'étendant également dans la jupe 119, pour conférer à la collerette 103 une relative élasticité (figures 5 et 6).

La collerette 203 peut comporter entre sa jupe 219 de coopération avec la bague 2 et sa rondelle d'appui 218 une bague 227 de centrage du corps de cheville dans le trou d'ancrage de diamètre extérieur égal au diamètre du trou (figure 7).

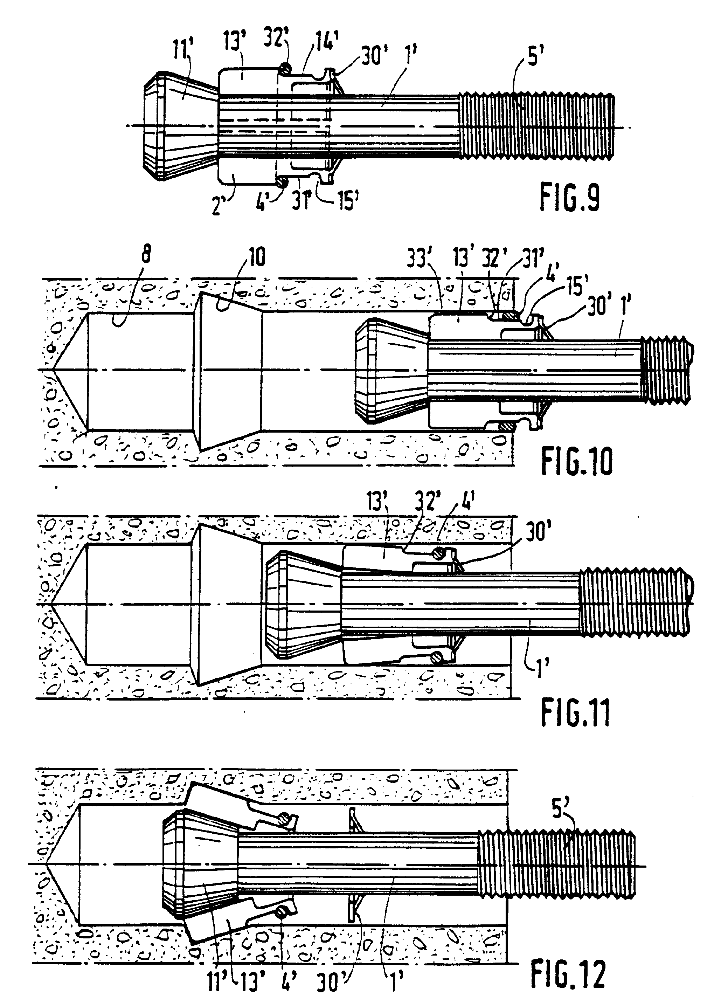

La collerette 303 peut comporter un orifice d'injection 328 pour, au moyen d'une buse 329, remplir de mortier le trou d'ancrage 8 après verrouillage de la cheville (figure 8).

En référence aux figures 9-12, la variante de réalisation de la cheville de l'invention qui y est représentée est tout à fait semblable à celle des figures précédentes avec, toutefois, quelques différences notables.

Le diamètre du corps de cheville 1' est constant entre son extrémité d'ancrage 11' et son extrémité de fixation 5'. La fonction de l'épaulement 21 est assurée par une rondelle d'arrêt 30' fixée au corps de cheville 1. Dans l'exemple considéré, il s'agit d'une rondelle frein ou auto-bloquante. Il n'y a plus de collerette d'immobilisation et empêchant l'expansion de la bague qui est conformée différemment. La bague 2' de la cheville des figures 9-12 comporte aussi une portion interne 13', de diamètre intérieur égal au diamètre du corps de cheville 1', disposée autour de celui-ci, prolongée par une portion externe 14' de diamètre intérieur plus grand que le diamètre du corps de cheville et formant jupe. La bague 2' comporte une partie de diamètre extérieur rétréci ménageant une surface cylindrique 31' s'étendant en partie sur la portion interne 13' et sur la jupe 14', depuis un épaulement annulaire 32', sur la partie interne 13', et une gorge annulaire 15' sur la jupe 14'. En position de stockage et de manutention, l'anneau élastique 4' est reçu contre l'épaulement 15'. Dans cette position, l'anneau 4' maintient la bague 2' immobilisée axialement sur le corps de cheville 1', la paroi intérieure de la portion interne 13' étant resserrée par l'anneau 4' contre le corps de cheville 1' (figure 9). L'anneau élastique 4' a une épaisseur supérieure à la différence des diamètres des surfaces extérieures 31' de la jupe et 33' de la partie interne 13', le diamètre de celle-ci restant sensiblement égal à celui du trou d'ancrage 8.

L'anneau élastique 4' peut être déplacé de sa position d'immobilisation, contre l'épaulement annulaire 32', à une position de basculement, dans la gorge 15'.

Quand on introduit la cheville dans le trou d'ancrage 8, du fait de l'épaisseur de l'anneau élastique 15', celui-ci est pincé et déformé entre la bague 2' et la paroi du trou 8 et ainsi immobilisé (figure 10) jusqu'à ce que la gorge 15' parvienne à son niveau et alors le reçoive, le libère et lui permette de reprendre sa forme d'origine. La poursuite de l'enfoncement de la cheville dans le trou 8 entraîne, sous l'action de la rondelle 30', la poursuite de l'entraînement de la bague 2', avec l'anneau élastique 4' dans la gorge 15' en position pour exercer sa fonction de basculement (figure 11). L'expansion et le verrouillage de cette variante de réalisation de la cheville s'effectue comme précédemment (figure 12).

En variante de la forme de réalisation des figures 9-12, la bague 2'' du corps de cheville 1'' de la figure 13 a une surface extérieure 31'' continue et sensiblement de même diamètre que le trou d'ancrage 8, avec seulement une gorge 15'', identique à la gorge 15', de réception de l'anneau élastique 4'' en position de basculement, et une gorge très fine 34'' de réception de l'anneau 4'' en position d'immobilisation. En outre, la partie externe 14'' de la bague 2'' n'a plus la même forme mais comporte un alésage intérieur 35'' non plus cylindrique mais conique et évasé vers l'extrémité de fixation du corps de cheville. On notera que cette forme de partie externe aurait tout aussi bien pu être donnée à la bague 2' des figures 9-12. La mise en place de la cheville de la figure 13 s'effectue quasiment de la même façon que précédemment, à une nuance près. Au lieu d'être pincé entre la paroi du trou et la bague, l'anneau élastique 4'' reste en butée contre le bord 20 du trou d'ancrage jusqu'à ce que la gorge 15'' arrive à son niveau.

## Revendications

1. Cheville de fixation d'un élément à un matériau récepteur (7) par ancrage de la cheville dans un trou (8) à contre-dépouille (10) foré dans le matériau comprenant un corps (1;1') avec une extrémité externe (5;5') de fixation de l'élément et une extrémité interne (11;11') conique évasée vers l'intérieur du trou, une bague de verrouillage (2;2') formée de segments disposés autour du corps et destinés à basculer dans la contre-dépouille (10) du trou et y être verrouillés par l'extrémité interne évasée (11;11') du corps, le diamètre extérieur de la bague (2;2') étant sensiblement égal à celui du trou (8), des moyens (4,14,19;4',14') d'immobilisation axiale provisoire des segments de la bague sur le corps, des moyens (21;30') solidaires du corps pour entraîner la bague (2;2') en translation jusque dans la contre-dépouille du trou et des moyens élastiques à action radiale (4;4') pour faire basculer les segments de la bague (2;2') dans la contre-dépouille du trou, caractérisée par le fait que lesdits moyens élastiques (4;4') sont agencés pour, par une action exercée radialement au corps (1;1') et à la bague (2;2'), assurer la double fonction de basculement des segments de la bague (2;2') et, avant, d'immobilisation axiale provisoire de ceux-ci en combinaison avec des moyens (3;32') agencés pour empêcher provisoirement la fonction de basculement.

2. Cheville selon la revendication 1, dans laquelle lesdits moyens (3) d'empêchement de la fonction de basculement des moyens élastiques sont montés autour du corps (1) de la cheville et agencés pour, sous l'action des moyens élastiques (4), coopérer radialement avec la bague (2) dans sa fonction d'immobilisation et pour être détachés d'elle sous l'action combinée du bord (20) du trou d'ancrage et des moyens (21) d'entraînement de la bague en translation.

3. Cheville selon la revendication 2, dans laquelle la bague de verrouillage (2) comporte une portion interne (13), disposée autour d'une portion de diamètre (12) rétréci du corps de la cheville et de même diamètre intérieur que la portion de corps rétrécie (12), prolongée par une portion externe (14), de diamètre intérieur plus grand que le diamètre du corps de cheville (1) et formant jupe à la surface extérieure de laquelle est ménagée une gorge (15) de réception d'un anneau élastique (4) et une collerette (3), pourvue d'une jupe interne (19) et montée autour du corps de cheville pour prendre appui,d'abord contre la jupe (14) de la bague, avec sa jupe (19) intercalée entre le corps de cheville (1) et la jupe (14) de la bague (2), et ainsi permettre à l'anneau élastique (4) d'assurer sa fonction d'immobilisation et, ensuite, contre le bord (20) du trou d'ancrage (8) pour permettre à la bague (2) de se détacher de la collerette (3) sous l'action de l'épaulement (21) ménagé par la portion de diamètre rétréci (13) du corps de cheville (1).

4. Cheville selon la revendication 1, dans laquelle les moyens élastiques (4') sont montés autour de la bague de verrouillage (2') et mobiles relativement à celle-ci d'une position interne d'immobilisation (32') à une position externe de basculement (15'), la bague de verrouillage (2') et les moyens élastiques (4') étant agencés pour que le trou d'ancrage (8) maintienne provisoirement les moyens élastiques (4') dans leur position d'immobilisation.

5. Cheville selon la revendication 4, dans laquelle les moyens d'entraînement (30') de la bague (2') en translation jusque dans la contre-dépouille comprennent une rondelle d'arrêt montée sur le corps de cheville (1'), en appui contre l'extrémité externe (14') de la bague.

6. Cheville selon la revendication 5, dans laquelle la bague de verrouillage comporte une portion interne (13'), disposée autour du corps de cheville (1') et de même diamètre intérieur que le corps de cheville, prolongée par une portion externe (14'), de diamètre intérieur plus grand que le diamètre du corps de cheville (1') et formant jupe à la surface extérieure (31') de laquelle est ménagée une gorge (15') de réception d'un anneau élastique (4') dans sa position de basculement, la portion interne (13') de la bague comportant extérieurement des moyens annulaires (32') de réception de l'anneau élastique (4') dans sa position d'immobilisation.

7. Cheville selon la revendication 6, dans laquelle les moyens de réception de l'anneau élastique dans sa position d'immobilisation peuvent comporter un épaulement annulaire (32') raccordé à la gorge (15') de la jupe par la surface extérieure (31') de celle-ci et l'épaisseur de l'anneau (4') est supérieure à la différence des diamètres des surfaces extérieures de la portion interne de la bague (13') et de sa jupe (31').

8. Cheville selon la revendication 6, dans laquelle la surface extérieure (31'') de la bague de verrouillage (2'') a un diamètre constant, et comporte une fine gorge (34'') de réception de l'anneau élastique (4'') dans sa position d'immobilisation.

## Patentansprüche

1. Dübel für die Befestigung eines Elements an einem Empfängermaterial (7) durch die Verankerung des Dübels in einer in das Material gebohrten Bohrung (8) mit einer Hinterschneidung (10), umfassend einen Körper (1; 1') mit einem äußeren Ende (5; 5') zur Befestigung des Elements und einem konischen inneren Ende (11; 11'), das sich zum Inneren der Bohrung hin aufweitet, einen Sperring (2; 2'), der von um den Körper angeordneten Segmenten gebildet wird, die dazu bestimmt sind, in der Hinterschneidung (10) der Bohrung aufzuklappen und dort von dem aufgeweiteten inneren Ende (11; 11') des Körpers verblockt zu werden, wobei der äußere Durchmesser des Rings (2; 2') im wesentlichen dem der Bohrung (8) entspricht, Mittel (4, 14, 19; 4', 14') zum provisorischen axialen Feststellen der Segmente des Rings auf dem Körper, mit dem Körper fest verbundene Mittel (21; 30'), um den Ring (2; 2') in einer Translationsbewegung bis in die Hinterschneidung der Bohrung voranzutreiben, und elastische Mittel (4; 4') mit radialer Wirkung, um die Segmente des Rings (2; 2') in der Hinterschneidung der Bohrung aufklappen zu lassen, dadurch gekennzeichnet, daß die elastischen Mittel (4; 4') vorgesehen sind, um durch eine radial auf den Körper (1; 1') und den Ring (2; 2') ausgeübte Wirkung die doppelte Funktion des Kippens der Segmente des Rings (2; 2') und, zuvor und in Kombination mit Mitteln (3; 32'), die dazu dienen, die Kippfunktion vorläufig zu verhindern, der provisorischen axialen Feststellung dieser Segmente zu gewährleisten.

2. Dübel nach Anspruch 1, bei dem die Mittel (3) zur Verhinderung der Kippfunktion der elastischen Mittel um den Körper (1) des Dübels angebracht und dafür vorgesehen sind, unter der Wirkung der elastischen Mittel (4) in radialer Weise mit dem Ring (2) bei dessen Feststellung zusammenzuwirken und von diesem unter der kombinierten Wirkung des Rands (20) der Ankerbohrung und der Mittel (21) zum Vorantreiben des Rings in einer Translationsbewegung losgelöst zu werden.

3. Dübel nach Anspruch 2, bei dem der Sperring (2) einen Innenteil (13) umfaßt, der um einen Teil des Dübelkörpers mit einem verengten Durchmesser (12) angeordnet ist und denselben Innendurchmesser aufweist wie der verengte Teil (12) des Körpers, fortgesetzt durch einen äußeren Teil (14) mit einem Innendurchmesser, der größer ist als der Durchmesser des Dübelkörpers (1), wobei dieser äußere Teil eine Schürze bildet, an deren Außenfläche eine Rille (15) zur Aufnahme eines elastischen Ringes (4) vorgesehen ist,und eine Manschette (3), die mit einer Innenschürze (19) versehen und so um den Dübelkörper angebracht ist, daß sie zunächst an der Schürze (14) des Rings anliegt, wobei ihre Schürze (19) zwischen den Dübelkörper (1) und die Schürze (14) des Rings (2) eingeschoben ist, und so dem elastischen Ring (4) ermöglicht, seine Feststellfunktion auszuüben, und anschließend an dem Rand (20) der Ankerbohrung (8) zur Anlage kommt, um dem Ring (2) zu ermöglichen, sich unter der Wirkung der Schulter (21), die durch den Teil des Dübelkörpers (1) mit dem verengten Durchmesser erzeugt wird, von seiner Manschette (3) loszulösen.

4. Dübel nach Anspruch 1, bei dem die elastischen Mittel (4') um den Sperring (2') angebracht sind und relativ zu diesem aus einer inneren Feststellposition (32') in eine äußere Kipp-Position (15') bewegt werden können, wobei der Sperring (2') und die elastischen Mittel (4') so angeordnet sind, daß die Ankerbohrung (8) die elastischen Mittel (4') provisorisch in ihrer Feststellposition hält.

5. Dübel nach Anspruch 4, bei dem die Mittel (30'), die dazu dienen, den Ring (2') in einer Translationsbewegung bis in die Hinterschneidung zu treiben, eine an dem Dübelkörper (1') angebrachte Sicherungsscheibe umfassen, die an dem äußeren Ende (14') des Ringes anliegt.

6. Dübel nach Anspruch 5, bei dem der Sperring einen Innenteil (13') umfaßt, der um den Dübelkörper (1') angeordnet ist und denselben Innendurchmesser aufweist wie der Dübelkörper, fortgesetzt durch einen äußeren Teil (14') mit einem Innendurchmesser, der größer ist als der Durchmesser des Dübelkörpers (1'), wobei dieser äußere Teil eine Schürze bildet, an deren Außenfläche (31') eine Rille (15') zur Aufnahme eines elastischen Ringes (4') in seiner Kipp-Position vorgesehen ist, wobei der Innenteil (13') des Rings außen ringförmige Mittel (32') zur Aufnahme des elastischen Rings (4') in seiner Feststellposition aufweist.

7. Dübel nach Anspruch 6, bei dem die Mittel zur Aufnahme des elastischen Rings in seiner Feststellposition eine ringförmige Schulter (32') umfassen können, die mit der Rille (15') der Schürze durch deren Außenfläche (31') verbunden ist, und die Dicke des Rings (4') größer ist als die Differenz der Durchmesser der Außenflächen des Innenteils des Rings (13') und seiner Schürze (31').

8. Dübel nach Anspruch 6, bei dem die Außenfläche (31'') des Sperrings (2'') einen konstanten Durchmesser besitzt und eine dünne Rille (34'') zur Aufnahme des elastischen Rings (4'') in seiner Feststellposition umfaßt.

## Claims

1. Peg for fixing an element to a receiving material (7) by anchoring the peg in a hole (8) with an undercut portion (10) drilled in the material, comprising a body (1;1') with an external end (5;5') for fixing the element and a tapered internal end (11;11') widening out towards the inside of the hole, a locking ring (2;2') formed of segments disposed about the body and intended to pivot in the undercut portion (10) of the hole and be locked therein by the internal tapered end (11;11') of the body, the external diameter of the ring (2,2') being substantially equal to that of the hole (8), means (4,14,19;4',14') for temporarily immobilizing the segments of the ring axially on the body, means (21;30') fast with the body for driving the ring (2;2') in translation into the undercut portion of the hole and radially acting resilient means (4;4') for causing the segments of the ring (2;2') to pivot in the undercut portion of the hole, characterized by the fact that the resilient means (4;4') are adapted so as to provide, by an action exerted radially on the body (1;1') and the ring (2;2'), the double function of pivoting of the segments of the ring (2;2') and, before, temporary axial immobilization thereof in combination with means (3;32') adapted for temporarily preventing the pivoting function.

2. Peg according to claim 1, wherein said means (3) for preventing the pivoting function of the resilient means are mounted about the body (1) of the peg and adapted, so as to cooperate, under the action of the resilient means (4), radially with the ring (2) in its immobilizing function and to be detached therefrom under the combined action of the edge (20) of the anchorage hole and of the means (21) driving the ring in translation.

3. Peg according to claim 2, wherein the locking ring (2) comprises an internal portion (13), disposed about a narrowed diameter portion (12) of the body of the peg and of the same internal diameter as the narrowed body portion (12), extended by an external portion (14) of an internal diameter greater than the diameter of the peg body (1) and forming a skirt at the external surface of which is formed a groove (15) receiving a resilient annulus (4) and a collar (3), having an internal skirt (19) and mounted about the peg body so as to bear, first, against the skirt (14) of the ring, with its skirt (19) inserted between the peg body (1) and the skirt (14) of the ring (2), and thus allow the resilient annulus (4) to ensure its immobilization function and, then, against the edge (20) of the anchorage hole (8) so that the ring (2) can be detached from the collar (3) under the action of the shoulder (21) formed by the narrowed diameter portion (13) of the peg body (1).

4. Peg according to claim 1, wherein the resilient means (4') are mounted about the locking ring (2') and are movable relatively thereto from an internal immobilization position (32') to an external pivoting position (15'), the locking ring (2') and the resilient means (4') being adapted so that the anchorage hole (8) temporarily holds the resilient means (4') in their immobilized position.

5. Peg according to claim 4, wherein the means (30') for driving the ring (2') in translation as far as the undercut portion comprise a stop washer mounted on the peg body (1'), in abutment against the external end (14') of the ring.

6. Peg according to claim 5, wherein the locking ring comprises an internal portion (13'), disposed about the peg body (1') and of the same internal diameter as the peg body, extended by an external portion (14') of an internal diameter greater than the diameter of the peg body (1') and forming a skirt (31') at the external surface (31') of which is formed a groove (15') receiving a resilient annulus (4') in its pivoted position, the internal portion (13') of the ring comprising externally annular means (32') for receiving the resilient annulus (4') in its immobilized position.

7. Peg according to claim 6, wherein the means for receiving the resilient annulus in its immobilizing position may comprise an annular shoulder (32') connected to the groove (15') of the skirt by the external surface (31') of the latter and the thickness of the annulus (4') is greater than the difference of the diameters of the external surfaces of the internal portion of the ring (13') and of its skirt (31').

8. Peg according to claim 6, wherein the external surface (31'') of the locking ring (2'') has a constant diameter and comprises a fine groove (34'') for receiving the resilient annulus (4'') in its immobilized position.
